# EUROPÄISCHE PATENTSCHRIFT

(11) **EP 0 555 272 B1**
(45) Veröffentlichungstag und Bekanntmachung des Hinweises auf die Patenterteilung: **31.05.1995**
(21) Anmeldenummer: 91918548.8
(22) Anmeldetag: 30.10.1991
(51) Int. Cl.: G21F 7/005, G21C 19/32

(54) **ABSCHIRMGLOCKE**
SHIELDING COVER
CLOCHE DE BLINDAGE

(30) Priorität: 01.11.1990 DE 4034719
(43) Veröffentlichungstag der Anmeldung: 18.08.1993
(73) Patentinhaber: Nukem GmbH, D-63754 Alzenau (DE)
(72) Erfinder: SCHEUERMANN, Klaus, D-63679 Schotten (DE); LAUG, Reiner, D-6451 Hammersbach (DE)
(74) Vertreter: Stoffregen, Hans-Herbert, Dr. Dipl.-Phys.
(86) Internationale Anmeldenummer: EP9102058
(87) Internationale Veröffentlichungsnummer: WO9208233

(56) Entgegenhaltungen:
- EP-A- 0 187 557
- EP-A- 0 212 028
- DE-A- 3 920 534
- FR-A- 1 226 659

## Beschreibung

Die Erfindung bezieht sich auf ein Verfahren zum Transport von Materialien wie radioaktiven Abfällen nach dem Oberbegriff des Anspruchs 1 sowie auf eine Abschirmglocke.

Für den Transport von radioaktiven Materialien wie Abfällen werden Abschirmglocken verwendet, die die von den Materialien ausgehende Strahlung auf zulässige Grenzwerte vermindern. Die in Körben vorhandenen radioaktiven Materialien werden von dem über dem Lageort angebrachten Greifer erfaßt und ins Innere der Abschirmglocke gezogen. Danach wird die Öffnung der Abschirmglocke abgedeckt. Anschließend kann die Abschirmglocke mit der radioaktiven Last zu einem Behälter transportiert werden, von dem der Deckel entfernt und z.B. auf einem gesonderten Gestell abgelegt ist. Danach werden die Körbe in den Behälter eingelagert. Auf diese Weise können die Materialien in Transportbehälter geladen werden.

Aus der FR-A 1 226 659 ist eine Vorrichtung zum Transportieren von radioaktiven Materialien bekannt, die ein auf ein Behälter aufsetzbares und kopfseitig mit dem Deckel des Behälters verschließbares Gehäuse umfaßt, das bodenseitig offen ist.

Die EP-A 0 187 557 beschreibt eine Transportvorrichtung zwischen einem Behälter und einer Aufnahme von diesem. Dabei wird eine Doppel-Dicht-Anordnung benutzt, die zwei Verschlüsse des Behälters und zwei Verschlüsse der Aufnahme umfaßt.

Der Erfindung liegt die Aufgabe zugrunde, ein Verfahren der zuvor beschriebenen Art derart weiterzubilden, daß auf einfache Weise ein Beladen des Behälters erfolgen kann, ohne daß einerseits die Abschirmfunktion der Abschirmglocke beinträchtigt wird und andererseits die Gafahr erwächst, daß durch den Behälterdeckel eine Kontaminierung erfolgt.

Die Aufgabe wird erfindungsgemäß im wesentlichen dadurch gelöst, daß für die Abschirmglocke der Deckel des unterhalb der unteren Öffnung angeordneten Behälters verwendet wird. Die Abschirmglocke wird folglich erfindungsgemäß durch einen Deckel verschlossen, der derjenige ist, der den Behälter verschließt, in den das mittels der Abschirmglocke zu transportierende Material eingebracht werden soll. Der Behälterdeckel ist folglich gleichzeitig Verschlußdeckel für die Abschirmglocke. Folglich ist eine einfache Handhabung möglich, ohne daß Vorkehrungen für die Lagerung des Behälterdeckels während dessen Beladens getroffen werden müssen.

Um einer Abschirmglocke Behälter unterschiedlicher Größen bzw. Deckelabmessungen zuordnen zu können, sind z.B. Adapterringe o.ä. an der Abschirmglockenöffnung anordbar, die sicherstellen, daß der einzuholende Deckel die Öffnung im erforderlichen Umfang abdeckt bzw. daß der Deckel in die Abschirmglocke einholbar ist.

Eine Abschirmglocke zur Durchführung des Verfahrens mit einem Zugelement wie Seilzug, an dessen im Inneren der Abschirmglocke angeordnetem freien Ende ein Greifelement für Aufnahmen wie Körbe für vorzugsweise radioaktive Materialien wie Abfälle angeordnet ist, die durch eine untere Öffnung der Abschirmglocke in diese einholbar bzw. aus dieser zum Einbringen in einen mit einem Deckel verschließbaren Behälter ausladbar sind, wobei an der Abschirmglocke ein Strahlung abschirmendes, nach mindestens einer Seite vorspringendes Gehäuseteil vorgesehen ist, und ein quer zur Längsachse der Abschirmglocke verfahrbarer und in Richtung der Längsachse heb- und senkbarer, Strahlung abschirmender Deckel in einer ersten Endlage im seitlichen Vorsprung des Gehäuseteils und in einer zweiten Endlage über der Öffnung angeordnet ist zeichnet sich dadurch aus, daß der innerhalb der Abschirmglocke (1) verschiebbare Deckel (20) der des Behälters (10) ist und daß unterhalb des Deckels bei dessen Anordnung in der Abschirmglocke eine Flüssigkeitsauffangwanne (44) quer zur Längsachse (6) verschiebbar angeordnet und in einer ersten Endlage im seitlichen Vorsprung des Gehäuseteils (4) und in einer zweiten Endlage auf bzw. oberhalb der Öffnung (8) angeordnet ist. Dabei wird die Auffangwanne erst unmittelbar vor Beladen des Behälters von der Abschirmglockenöffnung verfahren also entfernt, um sicherzustellen, daß Wasser nicht aus der Abschirmglocke heraustropfen und zu einer Kontamination führen kann. Abschirmwanne und Verschlußdeckel werden dann nicht synchron verschoben.

Vorzugsweise ist ein Seiltrieb außen an der Abschirmglocke gekapselt befestigt. Unter Seiltrieb ist hierbei der Antriebsmotor und die Trommel für das Seil zu verstehen. Das Seil verläuft durch einen Schlitz in der Wand der Abschirmglocke in das Innere. Der Seiltrieb ist zu Wartungs- oder Reparaturzwecken von außen zugänglich.

Der Seiltrieb kann ferner direkt oder indirekt mit einer Wiegeeinrichtung wie -zelle verbunden sein, um das Gewicht des Korbinhalts, also das der be- bzw. umzuladenden Materialien zu erfassen und gleichzeitig zu protokollieren.

Der Deckel ist zweckmäßigerweise in der Mitte gelenkig an einer Tragplatte aufgehängt, die entlang von senkrechten Führungen mittels Hubantriebs bewegbar ist, wobei die Führungen und der Hubantrieb mit einem längs horizontalen Schienen verfahrbaren Träger verbunden sind.

Es ist günstig, wenn der verfahrbare Träger über einen Block mit einer Gewindebohrung mit einer drehbar gelagerten Gewindespindel verbunden ist, deren eines Ende aus dem Gehäuseteil herausragt und mit einem außen am Gehäuseteil befestigten Getriebemotor verbunden ist. Der Getriebemotor ist auf der Außenseite der Abschirmglocke für Inspektions- und Wartungsarbeiten schnell und einfach zugänglich. Im Störungsfalle ist es möglich, den Träger von außen zu bewegen, falls dies notwendig sein sollte.

Vorzugsweise ist die Tragplatte an zwei in bezug auf die Aufhängung des Deckels diametral einander gegenüberliegenden Stellen mit Enden von Gewindespindeln verbunden, die in Gewindebuchsen des Trägers eingesetzt sind, die am Träger drehbar gelagert und über Wellen mit einem auf dem Träger befestigten Motor verbunden sind, der beiderseits aus seinem Gehäuse herausragende Wellenenden aufweist, von denen eines in der zweiten seitlichen Endlage des Deckels fluchtend zu einem Durchlaß in der Wand der Abschirmglocke ausgerichtet ist, wobei der Durchlaß durch einen Stopfen verschließbar ist. Bei einem Ausfall des Motors kann der Hubantrieb nach der Entfernung des Stopfens über das eine Wellenende des Motors mit einer an diesem angebrachten Welle betätigt werden, um z.B. den Deckel anzuheben oder abzusenken. Sowohl der Hubantrieb als auch der für die Querbewegung vorgesehene Antrieb des Deckels sind demnach bei einer Betriebsstörung von außen betätigbar, so daß bei der Bedienung ein Schutz vor der von der Last ausgehenden Strahlung besteht.

Die Flüssigkeitsauffangwanne ist vorzugsweise an den Seiten mit Rädern versehen, die auf Schienen verfahrbar sind, wobei an einer Seite der Flüssigkeitsauffangwanne ein Antriebsblock mit einer Gewindebohrung befestigt ist, in der eine Gewindespindel gelagert ist, deren eines Ende aus dem Gehäuseteil herausragt und mit einem außen am Gehäuseteil befestigten Getriebemotor verbunden ist. Bei einer Störung des Getriebemotors ist die Gewindespindel auf der Außenseite der Abschirmglocke zugänglich. Notwendige Bedienungsmaßnahmen können daher ohne Gefährdung durch die von der Last in der Abschirmglocke ausgehende Strahlung durchgeführt werden.

Die Flüssigkeitsauffangwanne ist insbesondere mit einer Wasserabführleitung versehen. In der Flüssigkeitsauffangwanne sammeln sich Tropfwasser und Crud-Teilchen an. Die Wanne kann bedarfsweise ausgespült werden.

Vorzugsweise bestehen die Wände der Abschirmglocke aus Kohlenstoffstahl, wobei die Innenseiten mit Edelstahl ausgekleidet sind, um einen Schutz gegen Korrosion zu erreichen.

Nahe am oberen Ende der Abschirmglocke ist ein Abluft-Anschluß vorgesehen, an dem das Innere der Abschirmglocke an das Abluftsystem eines Reaktorgebäudes angeschlossen werden kann.

Die Abschirmglocke weist ferner in einer Wand einen Dekontstopfen für den Anschluß einer Hochdrucklanze auf.

Die Anfahr- und Arbeitspositionen des Greifers, des Deckels und der Flüssigkeitsauffangwanne werden vorzugsweise durch Sensoren erfaßt, die mit einer Anzeigeeinrichtung verbunden sind. Die Getriebemotoren und die Sensoren sind mit einer Steuereinrichtung verbunden, die so eingestellt ist, daß sicherheitsrelevante Anfahr- und Arbeitspositionen verriegelt werden. Auf diese Weise wird verhindert, daß der Deckel und die Flüssigkeitsauffangwanne über die Öffnung gefahren werden können, wenn sich der Greifer und der Seilzug im Bereich der Öffnung befinden. Andereseits wird die Betätigung des Seiltriebs gesperrt, wenn die Öffnung durch den Deckel und die Flüssigkeitsauffangwanne verschlossen ist.

Die Teile im Inneren der Abschirmglocke, insbesondere der Greifer, die Flüssigkeitsauffangwanne, die Tragplatte, der Träger und die Teile zum Verbinden der Flüssigkeitsauffangwanne, der Tragplatte und des Trägers mit den jeweiligen Getriebemotoren, sind vorzugsweise aus Edelstahl hergestellt. Es ist aber auch möglich, diese Teile, soweit sie nicht wie die Gewindespindeln und die Gewindebuchsen Gleitbewegungen aufeinander ausführen, mit einem korrosionsbeständigen, gut dekontaminierbaren, hochdruckwasserfesten Anstrich zu versehen.

Am oberen Ende der Abschirmglocke sind Anschlagstellen für ein Zwei-Laschengehänge angeordnet.

Für den Transport oder die Lagerung der Abschirmglocke wird die Öffnung des Schachts mit einem Bodenblech verschlossen, das unter Zwischenlage einer Dichtung an der Abschirmglocke angeschraubt wird.

Weitere Einzelheiten. Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
Fig. 1 eine Abschirmglocke im Längsschnitt mit offenem Abschirmschacht,
Fig. 2 eine Abschirmglocke im Längsschnitt mit geschlossenem Abschirmschacht,
Fig. 3 einen Schnitt längs der Linien I - I der in Fig. 2 dargestellten Abschirmglocke.

Eine Abschirmglocke (1) weist einen quaderförmigen Abschirmabschnitt (2) auf, dessen längere Wände vertikal angeordnet sind. Der Abschirmabschnitt (2) umgibt einen Abschirmschacht (3) und ist an seinem unteren Ende offen. Das untere Ende des Abschirmabschnitts (3) sitzt auf einem quaderförmigen Gehäuseteil (4), dessen größere Länge horizontal verläuft. Der Abschirmschacht (3) setzt sich im Gehäuseteil (4) fort, das zum Inneren des Abschirmabschnitts (2) hin eine Öffnung (5) hat. Das Gehäuseteil (4) ist unsymmetrisch zur Längsachse (6) des Abschirmabschnitts (2) angeordnet. Der rechteckige Querschnitt des Gehäuseteils (4) ist größer als der Querschnitt des Abschirmabschnitts (2). Deshalb ragt das Gehäuseteil nach allen Seiten über die äußeren Wände des Abschirmabschnitts (2) hinaus. Durch die unsymmetrische Anordnung des Gehäuseteils (4) gegenüber der Längsachse (6) ergibt sich ein in größerem Ausmaß gegen den Abschirmabschnitt (2) seitlich vorspringender Gehäuseabschnitt (7) des Gehäuseteils (4). Auf der Unterseite des Gehäuseteils (4) ist unterhalb der Öffnung (5) im Abschirmabschnitt (2) eine Öffnung (8) vorhanden, deren Querschnitt etwas größer als derjenige der Öffnung (5) ist. An die Öffnung (8) schließt sich ein Abstandsbock (9) nach unten an, der hohl und nach unten offen ist. Die Höhe des Abstandsbocks (9) ist an die Höhe von Gußbehältern (10) angepaßt, in denen sich auf Distanzböcken (11) abgestellte Sickenfässer (12) befinden. Die Sickenfässer (12) sind für die Aufnahme von radioaktiven Materialien, insbesondere von Abfällen bestimmt. Die Abschirmglocke (1) ist für die Beschickung der Sickenfässer (12) mit den Materialien bestimmt.

Im Inneren der Abschirmglocke (1) ist ein Greifer (13) an einem Seilzug (14) aufhängt. Der Greifer (13) ist als Winkelring-Greifer mit Umlenkrollen ausgebildet und wird zur Erfassung von Körben, die mit radioaktiven Materialien wie Abfällen füllbar sind, verwendet.

Die Wände des Abschirmabschnitts (2) und des Gehäuseteils (4) bestehen vorzugsweise aus C-Stahl (Kohlenstoffstahl). Die Innenseiten des Abschirmabschnitts (2) und des Gehäuseteils (4) können mit Edelstahl ausgekleidet sein.

Der Seilzug (14), ein über eine Rolle (15) auf der Oberseite des Greifers (13) geführtes Seil, verläuft durch einen Schlitz (16) in der oberen Wand des Abschirmabschnitts (2) zur Trommel (17) eines gekapselten Seiltriebs (18), der außen am Abschirmabschnitt (2) auf dessen Oberseite angebracht und daher ohne Gefährdung durch eine unzulässig hohe Strahlung zugänglich ist, um Inspektions-, Wartungs- und Reparaturarbeiten durchzuführen.

Ferner kann der Seilzug (14) außerhalb der Abschirmglocke (1) mit einer nicht dargestellten Wiegeeinrichtung wie -zelle oder -balken mittelbar oder unmittelbar verbunden sein, um das Gewicht der umzuladenden bzw. zu belandenden Materialien zu erfassen und gleichzeitig gegebenenfalls zu protokollieren wie abzuspeichern.

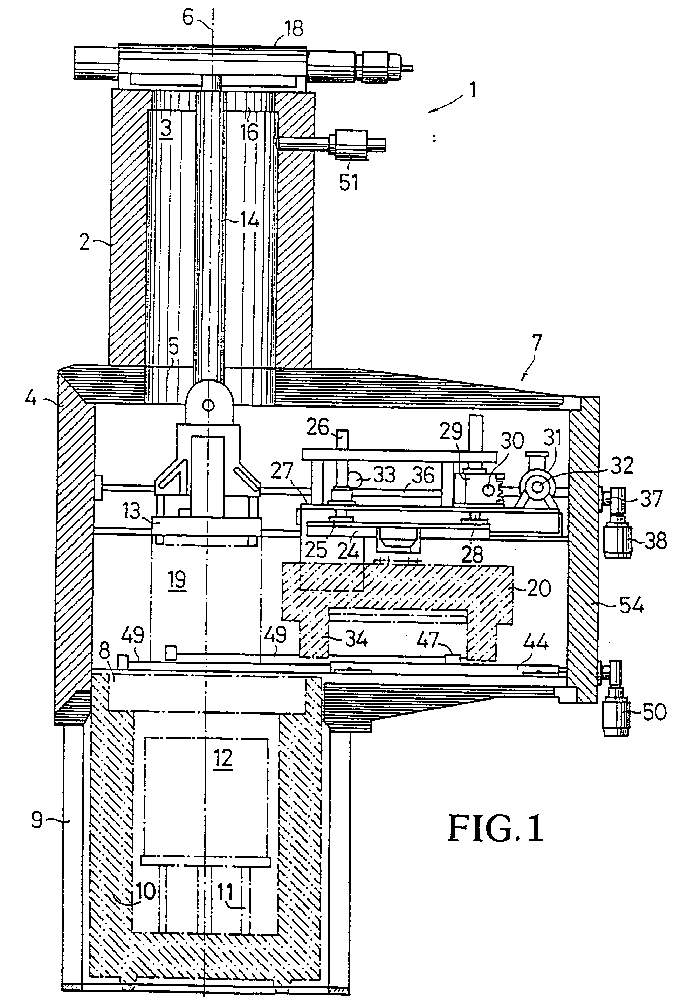

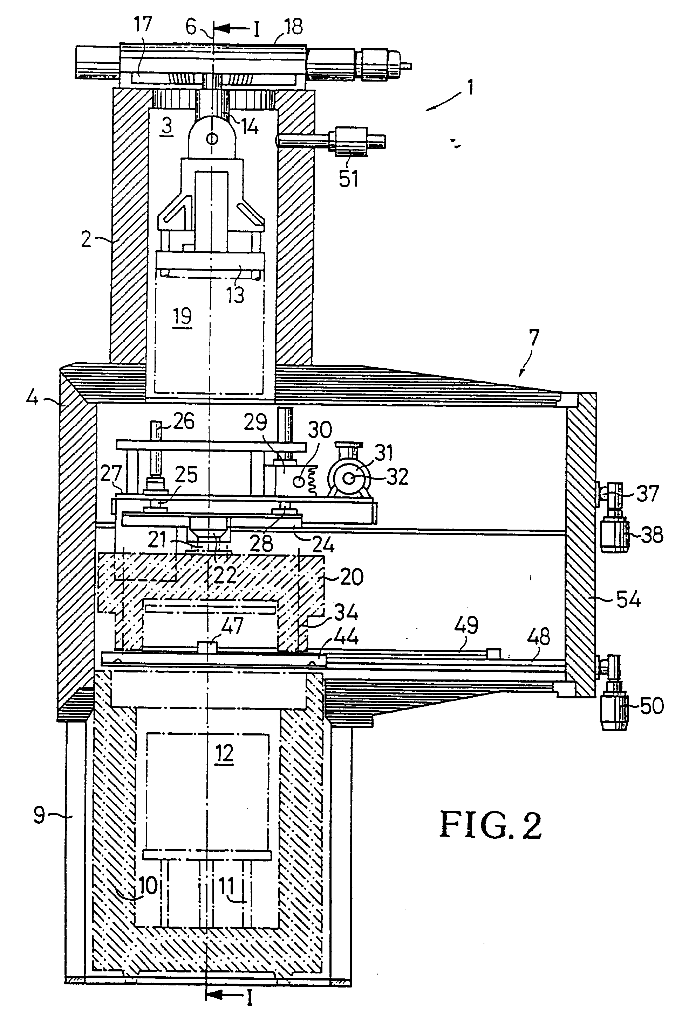

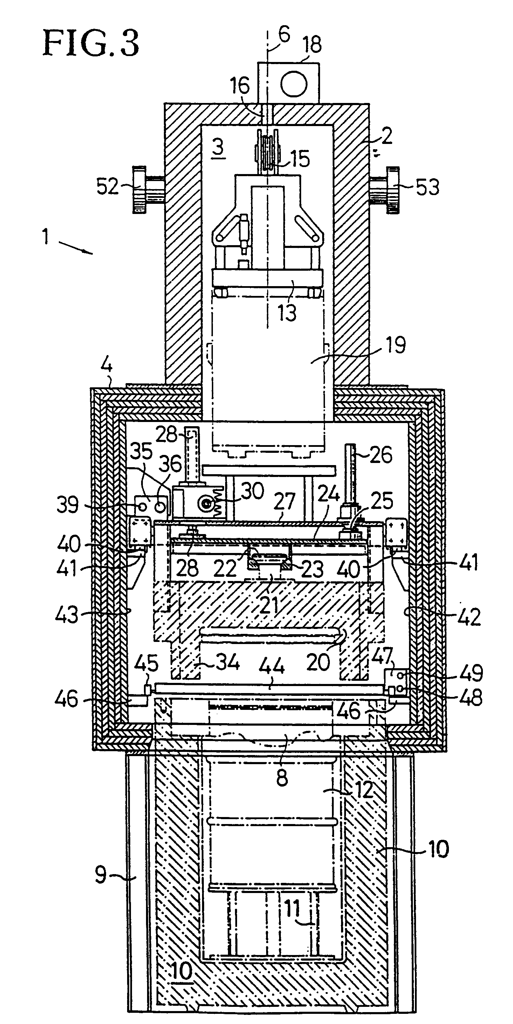

Bei der in Fig. 1 dargestellten Vorrichtung befindet sich der Greifer (13) und ein von diesem erfaßter Korb (19), der strichpunktiert gezeichnet ist, im Gehäuseteil (4). Die Fig. 2 und 3 zeigen den Greifer (13) mit einem Korb (19) in einer oberen Endlage, in der sich der Korb (19) im unteren Bereich des Abschirmabschnitts (2) befindet.

Zur Aufnahme eines Korbs (19) bewegt sich der Greifer (13) an einer entsprechenden Aufnahmestelle aus dem Gehäuseteil (4) heraus. Der Korb (19) wird dann in die in Fig. 2 und 3 dargestellte obere Endlage gezogen. Für die Umladung des Korbinhalts wird der Korb (19) nach unten bis in die Höhe des Randes des Sickenfasses (12) bewegt. Bei der Korbaufnahme und der Beladung des Korbinhalts ist die Öffnung (8) nicht bedeckt.

Findet keine Korbaufnahme oder Umladung des Korbinhalts statt und befindet sich der Korb (19) in der in Fig. 2 und 3 gezeigten oberen Endlage, dann wird die Öffnung (8) mit einem Deckel (20) abgedeckt. Dieser Deckel (20) ist der Verschlußdeckel des Behälters (10), der beladen werden soll. Die zweite Funktion des Deckels (20) als Verschlußelement für die Abschirmglocke (1) wird durch nachstehende Maßnahmen realisiert.

Die Öffnung (8) kann auf Deckel unterschiedlicher Größen angepaßt werden. Hierzu können in, unter- oder oberhalb der Öffnung (8) Adapter wie Adapterringe vorgesehen werden, die an die Deckelabmessungen angepaßt sind.

Der Deckel (20), dessen horizontale Abmessungen an den Querschnitt der Öffnung (8) bzw. des Adapterrings o.ä. angepaßt sind, weist auf seiner Oberseite in der Mitte einen Hals (21) mit einem Kopf (22) auf, der in einem Halter (23) gelagert ist. Der Halter (23) umgreift den Kopf (22) an dessen unterem Rand. Auf diese Weise ist der Deckel (20) in der Mitte gelenkig aufgehängt. Der Halter (23) ist an der Unterseite einer Tragplatte (24) befestigt, die rechteckig ausgebildet ist. Nahe an zwei diametral einander gegenüberliegenden Ecken der Tragplatte (24) sind zwei senkrechte Stäbe (25) mit ihren unteren Enden befestigt. Die Stäbe (25) sind in zylindrischen Führungen (26), die auf dem Träger (27) befestigt sind, axial verschiebbar gelagert. Nahe an den anderen Ecken der Tragplatte (24) sind die Enden von Gewindespindeln (28) befestigt, die in nicht näher dargestellten Gewindebuchsen geführt sind, die je in einem auf dem Träger (27) befestigten Gehäuse (29) drehbar gelagert sind. Die Außenseiten dieser Gewindebuchsen sind als Zahnrad mit Schrägverzahnung ausgebildet. Die Zahnräder wirken mit Gewindeabschnitten von Wellen (30) zusammen, die horizontal drehbar gelagert sind und von einem Motor (31) angetrieben werden, der beiderseits aus dem Motorgehäuse herausragende Wellenenden (32) aufweist. Das eine Wellenende (32) ist an die Wellen (30) angekuppelt. Das andere Wellenende ist in einer bestimmten Stellung des Motors (31) über einen verschließbaren Durchlaß (33) in der Wand des Gehäuseteils (4) der Abschirmglocke von außen, z.B. mittels eines Steckschlüssels, zugänglich, um bei Ausfall des Motors (31) die Drehung der Wellen (30) zu gewährleisten. Bei einwandfrei arbeitendem Motor (31) ist der Durchlaß (33) von einem nicht näher bezeichneten Stopfen verschlossen.

Die Tragplatte (24) mit den Führungen (26), den Gewindespindeln (28), den Gewindebuchsen, den Wellen (30) und dem Motor (31) bilden einen auf dem Träger (27) angeordneten Hubantrieb für den Deckel (20), dessen Wandstärke so bemessen ist, daß die oben erwähnten Dosisleistungen auf der Außenseite nicht überschnitten werden. Mit dem Hubantrieb kann der Deckel (20) in Richtung der Längsachse (6) bewegt werden. Der Deckel (20) weist einen nach unten ragenden ringförmigen Vorsprung (34) auf.

Der Träger (27) ist im Gehäuseteil (4) quer zur Längsachse (6), also in horizontaler Richtung verschiebbar angeordnet. In einer ersten seitlichen Endlage, die in Fig. 1 dargestellt ist, befinden sich der Deckel (20) einschließlich des Trägers (27) und des mit dem Träger (27) verbundenen Hubantriebs im Gehäuseabschnitt (7) des Gehaüseteils (4) außerhalb der vertikalen Zone, in der der Greifer (13) und der Korb (19) auf- und abbewegt werden können. In der zweiten Endlage, die in Fig. 2 dargestellt ist, befinden sich der Deckel (20) und der Träger (27) mit dem Hubantrieb in derjenigen Zone, die für die Auf- und Abbewegung des Greifers (13) und des Korbs (19) vorgesehen ist. Der Deckel (20) verschließt hierbei die Öffnung (8) und schirmt den Inhalt des Korbs (19) ab. In der zweiten Endlage des Deckels (29) nehmen der Greifer (13) und der Korb (19) ihre obere Endlage ein, in der sie sich im Abschirmabschnitt (2) befinden.

Am Träger (27) ist ein Block (35) mit einer nicht näher bezeichneten Gewindebohrung und einem axialen Führungslager befestigt. In die Gewindebohrung greift eine Gewindespindel (36) ein, die im Gehäuseteil (4) an einer Seite drehbar gelagert ist und mit einem Ende aus dem Gehäuseteil (4) herausragt. Dieses Ende ist an eine Welle (37) eines Getriebemotors (38) angekuppelt, der außern am Gehäuseteil (4) befestigt ist. Das axiale Führungslager umgibt eine Führungsstange (39), die innerhalb des Gehäuseteils (4) angeordnet ist. Die Gewindespindel (36) und die Führungsstange (39) sind nahe an einer Innenwand des Gehäuseteils (4), außerhalb der senkrechten Zone für den Greifer (13) angeordnet. An den Seiten des Trägers (27) sind Räder (40) drehbar gelagert, die auf Schienen (41) laufen, die an Innenwänden (42), (43) des Gehäuseteils (4) befestigt sind. Der Getriebemotor (38) treibt den Träger (27) über die Gewindespindel (36) an. Je nach der Drehrichtung des Getriebemotors (38) bewegt sich der Träger (27) von der ersten Endlage zur zweiten Endlage oder umgekehrt. Bei einem Ausfall des Getriebemotors (38) kann die Gewindespindel (36) von außen manuell gedreht werden, so daß der Deckel (20) in eine gewünschte Stellung gebracht werden kann. Außerdem ist der Getriebemotor (38) auf der Außenseite des Gehäuseteils (4) zu Inspektions-, Wartungs- und Reparaturzwecken gut zugänglich. Gefährliche Strahlenbelastungen werden bei diesen Arbeiten deshalb vermieden.

Am Boden des Gehäuseteils (4) ist eine flache FIüssigkeitsauffangwanne (44) quer zur Längsachse (6) verschiebbar gelagert. An den flachen Seiten der Flüssigkeitsauffangwanne sind Räder (45) befestigt, die auf Schienen (46) rollen, die jeweils an den Innenwänden (42), (43) angebracht sind. An einer flachen Seite der Auffangwanne (44) ist ein Antriebsblock (47) befestigt, der eine nicht näher bezeichnete Gewindebohrung und eine zylindrische Führung enthält. In die Gewindebohrung greift eine Gewindespindel (48) ein, die im Gehäuseteil (4) drehbar gelagert ist und deren eines Ende aus dem Gehäuseteil (4) herausgeführt ist. In die Führung ist eine Führungsstange (49) eingeschoben, die im Gehäuseteil (4) fest angeordnet ist. Die Führungsstange (49) sorgt bei der Verschiebung der Flüssigkeitsauffangwanne (44) für eine gradlinige Fahrbewegung. Das aus dem Gehäuseteil (4) herausragende Ende der Gewindespindel (48) ist an eine nicht näher dargestellte Antriebswelle eines Getriebemotors (50) angekuppelt, der außem am Gehäuseteil (4) befestigt ist. Der Getriebemotor ist daher für Inspektion-, Wartungs- und Reparaturarbeiten außen an der Abschirmglocke (1) leicht zugänglich, d.h. gefährliche Strahlenbelastungen werden bei diesen Arbeiten vermieden.

Der Getriebemotor (50) treibt die Gewindespindel (48) an, die über den Antriebsblock (47) die Flüssigkeitsauffangwanne (44) in Bewegung versetzt. In einer ersten Endlage im seitlichen Gehäuseabschnitt (7) des Gehäuseteils (4) ist die Flüssigkeitsauffangwanne (44) neben der Öffnung (8) angebracht. Es ist also eine ungehinderte Auf- und Abbewegung des Greifers (13) und des Korbs (19) möglich.

In einer zweiten Endlage befindet sich die Flüssigkeitsauffangwanne (44) oberhalb der Öffnung (8) und bedeckt diese. Die Flüssigkeitsauffangwanne (44) hat einen Auffangquerschnitt, der mindestens der horizontalen Ausdehnung des Deckels (20) entspricht. Vor der Beschickung des Sickenfasses (12) mit dem Inhalt des Korbs (19) wird die FIüssigkeitsauffangwanne (44) zum Auffangen von Tropfwasser und Crud-Teilchen aus dem Korb (19) benutzt. Damit werden der Kopfbereich des Gußbehälters (10) und der Flansch des Sickenfasses (12) vor Benetzung mit Tropfwasser und Crud-Teilchen geschützt.

Wenn sich der Greifer (13) und der Korb (19) innerhalb des Abschirmabschnitts (2) befinden und der Deckel (20) die Öffnung (8) abdeckt, befindet sich die Flüssigkeitsauffangwanne (44) zwischen der Unterseite des Deckels (20) und der Öffnung (8). Die Unterseite des Vorsprungs (34) kann gegebenenfalls hierbei den Boden der Flüssigkeitsauffangwanne (44) berühren. In der Flüssigkeitsauffangwanne (44) verbleibt noch so viel Raum, daß vom Korb (19) abtropfende Flüssigkeit aufgefangen wird. Die Flüssigkeitsauffangwanne (44) hat eine nicht näher dargestellte Wasserabführleitung. Bedarfsweise kann deshalb die Flüssigkeitsauffangwanne (44) ausgespült werden.

Nahe am oberen Ende des Abschirmabschnitts (2) ist ein Abluftleitungs-Anschluß (51) in Form eines Stutzens vorgesehen, über den das Innere der Abschirmglocke (1) an eine Gebäudeventilation eines Reaktorgebäudes angeschlossen werden kann.

Die Abschirmglocke (1) weist ferner einen Dekontstopfen für den Einsatz einer Hochdrucklanze auf. Das Innere der Abschirmglocke (1) kann deshalb mit unter hohem Druck gespeistem Wasser gereinigt werden.

Die Teil im Inneren der Abschirmglocke (1) sind zweckmäßigerweise aus Edelstahl hergestellt, um die Korrosion zu verhindern. Es ist auch möglich, Schutz vor Korrosion mittels Anstrichen zu erreichen, die korrosionsbeständig, gut dekontaminierbar,, hd-wasserfest und mehrlagig sind. Diejenigen Teile, die Gleitbewegungen zueinander ausführen, z.B. die Gewindespindeln (28), (36), (48), die Führungsstangen (39), (49), die Stäbe (25), der Block (35), der Antriebsblock (47) und die Räder (40), (45) sind vorzugsweise aus Edelstahl hergestellt.

Die Abschirmglocke (1) enthält außen am Abschirmabschnitt (2) zwei Lastanschlagstellen (52), (53) für ein Zwei-Laschengehänge über das die Abschirmglocke an einem Kran aufgehängt wird.

Im Inneren der Abschirmglocke (1) sind Sensoren für die Erfassung bestimmter Positionen des Greifers (13), des Trägers (27), der Tragplatte (24) und der Flüssigkeitsauffangwanne (44) vorgesehen. Bei den Sensoren kann es sich um Endlagenschalter handeln. Insbesondere sind Sensoren für die Feststellung der oberen Endlage des Greifers (13), der oberen und unteren Endlage der Tragplatte (24), der ersten und zweiten Endlage des Trägers (27) und der ersten und zweiten Endlage der Flüssigkeitsauffangwanne (44) vorgesehen. Diese nicht näher dargestellten Sensoren sind über Kabel und Stecker an eine Steuereinrichtung mit einer Anzeigeeinrichtung anschließbar. Mit der Steuereinrichtung werden sicherheitsrelevante Anfahr- und Arbeitspositionen verriegelt. Beispielsweise wird durch die Verriegelung verhindert, daß der Träger (27) mit dem Deckel (20) und die Flüssigkeitsauffangwanne (44) in die Transportzone des Greifers (13) verschoben werden können, wenn nicht der Greifer (13) in seiner oberen Endlage hängt. Wenn die Abschirmglocke (1) z.B. auf der Schiene oder der Straße transportiert oder an einem Ort gelagert wird, verschließt ein anschraubbares Bodenblech mit eingelegter Dichtung die Öffnung (8).

Bei der oben beschriebenen Abschirmglocke (1) läßt sich nach der Einführung des jeweiligen Korbs (19) in den Abschirmschacht (3) durch Fernsteuerung die Öffnung (8) schnell und einfach unter Abschirmung der von der Ladung des Korbs (19) ausgehenden Strahlung verschließen. Wenn die Abschirmglocke (1) am Entladeort angekommen ist, kann die Öffnung (8) durch Fernsteuerung in kurzer Zeit freigegeben werden. Die Handhabung der Abschirmglocke (1) wird deshalb vereinfacht. Die Transportleistung kann durch das schnelle Verschließen und Öffnen des Zugangs zur Abschirmglocke durch eine Zeiteinsparung erhöht werden.

Das Gebäuseteil (4) weist an seiner dem Abschirmabschnitt (2) abgewandten Stirnseite einen abnehmbaren Deckel (54) auf, nach dessen Abnahme das Innere des Gehäuseteils (4) für die Revision sichtbar bzw. zugänglich ist.

Der Gehäuseabschnitt (7) kann ferner aus Materialersparnisgründen eine abgestufte Abschirmung aufweisen, wie in Fig. 1 und 2 durch die horizontal verlaufenden Balken unterschiedlicher Längen angedeutet ist.

## Patentansprüche

1. Verfahren zum Transport von Materialien wie radioaktiven Abfällen mittels einer eine untere und mit einem Deckel (20) verschließbaren Öffnung (8) aufweisenden Abschirmglocke (1), die ein Strahlung abschirmendes, nach mindestens einer Seite vorspringendes Gehäuseteil (7) aufweist, wobei der Deckel (20) quer zur Längsachse (6) der Abschirmglocke verfahrbar und in Richtung der Längsachse heb- und senkbar ist und in einer ersten Endlage im seitlichen Vorsprung des Gehäuseteils in einer zweiten Endlage über der Öffnung angeordnet wird, und wobei ein mit einem Deckel (20) verschließbarer Behälter (10) zu dessen Befüllen bzw. Entladen mit den Materialien unterhalb der Öffnung der Abschirmglocke angeordnet wird,
**dadurch gekennzeichnet**,
daß für die Abschirmglocke (1) der Deckel (20) des unterhalb der unteren Öffnung (8) angeordneten Behälters (10) verwendet wird.

2. Abschirmglocke zur Durchführung des Verfahrens nach Anspruch 1, mit einem Zugelement (14) wie Seilzug, an dessen im Inneren der Abschirmglocke (1) angeordnetem freiem Ende ein Greifelement (13) für Aufnahmen wie Körbe (19) für vorzugsweise radioaktive Materialien wie Abfälle angeordnet ist, die durch eine untere Öffnung (8) der Abschirmglocke in diese einholbar bzw. aus dieser zum Einbringen in einen mit einem Deckel verschließbaren Behälter (10) ausladbar sind, wobei an der Abschirmglocke ein Strahlung abschirmendes, nach mindestens einer Seite vorspringendes Gehäuseteil (7) vorgesehen ist, und ein quer zur Längsachse der Abschirmglocke verfahrbarer und in Richtung der Längsachse (6) heb- und senkbarer, Strahlung abschirmender Deckel in einer ersten Endlage im seitlichen Vorsprung des Gehäuseteils und in einer zweiten Endlage über der Öffnung angeordnet ist,
**dadurch gekennzeichnet,**
daß der innerhalb der Abschirmglocke (1) verschiebbare Deckel (20) der des Behälters (10) ist und daß unterhalb des Deckels bei dessen Anordnung in der Abschirmglocke eine Flüssigkeitsauffangwanne (44) quer zur Längsachse (6) verschiebbar angeordnet und in einer ersten Endlage im seitlichen Vorsprung des Gehäuseteils (4) und in einer zweiten Endlage auf bzw. oberhalb der Öffnung (8) angeordnet ist.

3. Abschirmglocke nach Anspruch 2,
**dadurch gekennzeichnet**,
daß der Deckel (20) in der Mitte gelenkig an einer Tragplatte (24) aufgehängt ist, die entlang senkrechter Führungen mittels eines Hubantriebs verfahrbar ist, und daß die Führungen und der Hubantrieb mit einem längs horizontaler Schienen (41) verfahrbaren Träger (27) verbunden sind.

4. Abschirmglocke nach Anspruch 3,
**dadurch gekennzeichnet**,
daß der verfahrbare Träger (27) über einen Block (35) mit einer Gewindebohrung mit einer drehbar gelagerten Gewindespindel (36) verbunden ist, deren eines Ende aus dem Gehäuseteil (4) herausragt und mit einem außen am Gehäuseteil befestigten Getriebemotor (38) verbunden ist.

5. Abschirmglocke nach Anspruch 3,
**dadurch gekennzeichnet**,
daß die Tragplatte (24) an zwei in bezug auf die Aufhängung des Deckels (20) diametral einander gegenüberliegenden Stellen mit Enden von Gewindespindeln (28) verbunden ist, die in Gewindebuchsen des Trägers (27) eingesetzt sind, die am Träger (27) drehbar gelagert sind und über Wellen (30) mit einem auf dem Träger (27) befestigten Motor (31) verbunden sind, der beiderseits aus seinem Gehäuse herausragende Wellenenden (32) aufweist, von denen eines in der zweiten seitlichen Endlage des Deckels (20) fluchtend zu einem Durchlaß (33) in der Wand der Abschirmglocke (1) ausgerichtet ist, und daß der Durchlaß (33) mit einem Stopfen verschließbar ist.

6. Abschirmglocke nach einem oder mehreren der vorhergehenden Ansprüche 2-5,
**dadurch gekennzeichnet**,
daß die Flüssigkeitsauffangwanne (44) an den Seiten mit Rädern (45) versehen ist, die auf Schienen (46) verfahrbar sind, und daß an einer Seite der Flüssigkeitsauffangwanne (44) ein Antriebsblock (47) mit einer Gewindebohrung befestigt ist, in der eine Gewindespindel (48) gelagert ist, deren eines Ende aus dem Gehäuseteil (4) herausragt und mit einem außen am Gehäuseteil (4) befestigten Getriebemotor (50) verbunden ist.

7. Abschirmglocke nach einem oder mehreren der vorhergehenden Ansprüche 2-6,
**dadurch gekennzeichnet**,
daß die Flüssigkeitsauffangwanne (44) mit einer Wasserabführleitung verbunden ist.

8. Abschirmglocke nach einem oder mehreren der vorhergehenden Ansprüche 2-7,
**dadurch gekennzeichnet**,
daß nahe am oberen Ende der Abschirmglocke (1) ein Abluftleitungsanschluß (51) vorgesehen ist.

9. Abschirmglocke nach einem oder mehreren der vorhergehenden Ansprüche 2-8,
**dadurch gekennzeichnet**,
daß in einer Wand ein Dekontstopfen für den Anschluß einer Hochdrucklanze vorgesehen ist.

10. Abschirmglocke nach einem oder mehreren der vorhergehenden Ansprüche 2-9,
**dadurch gekennzeichnet**,
daß zumindest die obere Endlage des Greifers (13), die erste und zweite Endlage des Deckels (20) und die obere und untere Endlage des Deckels (20) mittels Sensoren erfaßbar sind, deren Ansprechen an einer mit der Abschirmglocke (1) durch Kabel verbundenen Steuereinrichtung anzeigbar ist.

11. Abschirmglocke nach einem oder mehreren der vorhergehenden Ansprüche 2-10,
**dadurch gekennzeichnet**,
daß die Abschirmglocke im Inneren durch Edelstahl ausgekleidet ist.

12. Abschirmglocke nach einem oder mehreren der vorhergehenden Ansprüche 2-11,
**dadurch gekennzeichnet,**
daß nahe am oberen Ende Anschlagstellen (52, 53) für ein Zweilaschengehänge vorgesehen sind.

13. Abschirmglocke nach einem oder mehreren der vorhergehenden Ansprüche 2-12,
**dadurch gekennzeichnet,**
daß zumindest die Gewindespindeln (28, 36, 48), die Führungsstangen (39, 49) für den Träger (27) und die Flüssigkeitsauffangwanne (44) und die Räder (40, 45) des Trägers und der Flüssigkeitsauffangwanne (44) aus Edelstahl bestehen.

14. Abschirmglocke nach einem oder mehreren der vorhergehenden Ansprüche 2-13,
**dadurch gekennzeichnet**,
daß die nicht aus Edelstahl bestehenden Teile im Inneren der Abschirmglocke (1) mit einem mehrlagigen Anstrich aus korrosionsbeständigem, gut dekontaminiertem, HD-wasserfestem Material überzogen sind.

15. Abschirmglocke nach zumindest Anspruch 2,
**dadurch gekennzeichnet**,
daß ein einen Seilzug betätigender Seiltrieb (18) außen an der Abschirmglocke (1) gekapselt befestigt ist und daß der Seilzug durch einen Schlitz (16) in der Abschirmglocke (1) verläuft.

16. Abschirmglocke nach zumindest Anspruch 2,
**dadurch gekennzeichnet**,
daß die Abschirmglockenöffnung (8) an Behälterdeckel unterschiedlicher Abmessungen anpaßbar ist.

17. Abschirmglocke nach Anspruch 16,
**dadurch gekennzeichnet**,
daß die Anpassung über Adapterringe erfolgt.

18. Abschirmglocke nach zumindest Anspruch 2,
**dadurch gekennzeichnet**,
daß die Hubeinrichtung (14) für die Aufnahme (19) für die radioaktiven Materialien mit einer Wiegeeinrichtung verbunden ist.

## Claims

1. Method for transport of materials such as radioactive waste using a shielding cover (1) which has a bottom aperture (8) being closable by a lid (20), said shielding cover is provided with a radiation-shielding housing section (7) projecting at least on one side, whereas the lid (20) is provided movable transverse to the longitudinal axis of the shielding cover, raisable and lowerable in direction of the longitudinal axis, said lid is disposed in a first end position in the lateral projection of said housing part and in a second end position above said aperture, and whereas a container (10) being closable by a lid (20) is disposed underneath the aperture of the shielding cover for being loaded or unloaded, respectively, with the materials.
**characterized in**
that the lid (20) of the container (10) underneath the bottom aperture (8) is used for the shielding cover (1).

2. A shielding cover for working of the process according to claim 1, having a traction element (14) like a tackle line, the free end of which is arranged in the interior of the shielding cover (1) having a claw (13) for receptacles like baskets (19) for preferable radioactive materials like waste, the baskets can be loaded through a bottom aperture (8) into the shielding cover and can be unloaded, respectively, into a container being closable by a lid (10), whereas a housing section (7) is arranged on the shielding cover shielding radiation and projecting at least on one side, and a radiation-shielding lid is arranged in a first end position in the lateral projection of the housing and in a second end position above the aperture, said lid is movable transverse to the longitudinal axis (6) of the shielding cover and raisable and lowerable in the direction of the longitudinal axis,
**characterized in**
that the lid (20) being movable in said shielding cover (1) is the lid of the container (10) and that below the lid near its arrangement in in the shielding cover a fluid acceptance tank (44) is disposed movable transverse to the longitudinal axis (6) and arranged in a first end position in the lateral projection of the housing section (4) and in a second end position on the opening (8) or above, respectively.

3. A shielding cover according to claim 2,
**characterized in**
that the lid (20) is hinged in its centre being suspended from a support plate (24), said support plate is movable by a lifting drive along vertical guides, said guides and said lifting drive are connected to a beam (27) movable along horizontal rails (41).

4. A shielding cover according to claim 3,
**characterized in**
that the movable beam (27) is connected via a block (35) to a threaded hole with a rotatably mounted threaded spindle (36), one end of which projects out of the housing section (4) and is connected to a geared motor (38) fastened to the outside of said housing section (4).

5. A shielding cover according to claim 3,
**characterized in**
that the support plate (24) is connected, at two points diametrically opposite to one another in relation to the suspension of said lid (20), to ends of threaded spindles (28) inserted into threaded bushes of said beam (27) that are rotatably mounted on said beam (28) and are connected by shafts (30) to a motor (31) arranged on said beam (27), said motor (31) having shaft ends (32) projecting from both sides of its housing, one of said ends being aligned flush with an opening (33) in the wall of said shielding cover (1) in the second end position of said lid (20), and wherein said opening (33) is closable using a plug.

6. A shielding cover according to one or more of the preceding claims 2 to 5,
**characterized in**
that the fluid acceptance tank (44) is provided on its sides with wheels (45) that run on rails (46), and that on one side of the fluid acceptance tank (44) a drive block (47) having a threaded hole is arranged, and in said threaded hole a threaded spindle (48) is mounted, one end of which projects from said housing part (4) and is connected to a geared motor (50) fastened to the outside of said housing part (4).

7. A shielding cover according to one or more of the preceding claims 2 to 6,
**characterized in**
that the fluid acceptance tank (44) is connected to a water drain line.

8. A shielding cover according to one or more of the preceding claims 2 to 7,
**characterized in**
that a waste air connection (51) is provided near to the upper end of the shielding cover (1).

9. A shielding cover according to one or more of the preceding claims 2 to 8,
**characterized in**
that a decontamination plug is arranged in one wall for connection of a high-pressure lance.

10. A shielding cover according to one or more of the preceding claims 2 to 9,
**characterized in**
that at least the upper end position of the claw (13), the first and second end position of the lid (20) and the upper and lower end position of the lid (20) can be picked up by sensors whose response is indicated at a control unit connected to said shielding cover (1) by cable.

11. A shielding cover according to one or more of the preceding claims 2 to 10,
**characterized in**
that the shielding cover is lined in its interior with special steel.

12. A shielding cover according to one or more of the preceding claims 2 to 11,
**characterized in**
that attachment points (52, 53) for a two-strap suspension tackle are disposed near to the upper end.

13. A shielding cover according to one or more of the preceding claims 2 to 12,
**characterized in**
that at least the threaded spindles (28, 36, 48), the guide rods (39, 49) for the beam (27) and the fluid acceptance tank (44), and the weels (40, 45) of said beam and said fluid acceptance tank (44) are of special steel.

14. A shielding cover according to one or more of the preceding claims 2 to 13,
**characterized in**
that those parts not consisting of special steel in the interior of the shielding cover (1) are covered with a multi-layer coating of corrosion-resistant, easy to decontaminate and high-pressure waterproof material.

15. A shielding cover according to at least claim 2,
**characterized in**
that a rope drive (18) operating a tackle line is fastened in encapsulated form to the outside of said shielding cover (1), and said tackled line passes through a slot (16) in said shielding cover (1).

16. A shielding cover according to at least claim 2,
**characterized in**
that said shielding cover apreture (8) is adaptable to container lids of varying dimensions.

17. A shielding cover according to at least claim 16,
**characterized in**
that adaption is achieved using adapter rings.

18. A shielding cover according to at least claim 2,
**characterized in**
that the lifting device (14) for the receptacle (19) to hold the radioactive materials is connected to a weighing device.

## Revendications

1. Procédé pour le transport de matériaux tels que déchets radioactifs au moyen d'une cloche de blindage (1) présentant une ouverture inférieure (8) et fermable par un couvercle (20), qui présente une partie de boîtier (7) en saillie, au moins d'un côté, et arrêtant le rayonnement, dans lequel le couvercle (20) peut se déplacer transversalement par rapport à l'axe longitudinal (6) de la cloche de blindage et être soulevé et abaissé dans la direction de l'axe longitudinal et qui est disposé dans une première position terminale dans la saillie latérale de la partie de boîtier et dans une deuxième position terminale au-dessus de l'ouverture, et dans lequel un récipient (10), fermable par un couvercle (20), est disposé en dessous de l'ouverture de la cloche de blindage pour remplir ou vider celle-ci, caractérisé en ce que, pour la cloche de blindage (1), le couvercle (20) du récipient (10) disposé en dessous de l'ouverture inférieure (8) est utilisé.

2. Cloche de blindage pour mettre en oeuvre le procédé selon la revendication 1, avec un élément de traction (14) tel qu'un câble de traction à l'extrémité libre duquel est disposé, à l'intérieur de la cloche de blindage (1), un élément de grappin (13) pour un récipient, tel qu'un panier (19), destiné, de préférence, à des matériaux radioactifs tels que des déchets qui peut être introduit dans la cloche de blindage par une ouverture inférieure (8) de celle-ci ou être retiré de celle-ci pour l'introduction dans un récipient (10) pouvant être fermé par un couvercle, dans laquelle il est prévu une partie de boîtier (7) de la cloche de blindage qui fait saillie au moins d'un côte et qui arrête le rayonnement et un couvercle pouvant se déplacer transversalement par rapport à l'axe longitudinal de la cloche de blindage et pouvant être levé et abaissé dans la direction de l'axe longitudinal (6) et interrompant le rayonnement, qui est disposé, dans une première position terminale, dans la saillie latérale de la partie de boîtier et, dans une deuxième position terminale, au-dessus de l'ouverture, caractérisée en ce que le couvercle (20) pouvant se déplacer à l'intérieur de la cloche de blindage (1) est celui du récipient (10) et en ce que, en dessous du couvercle, lorsque celui-ci est disposé dans la cloche de blindage, est placée une cuve de collecte de liquide (44) est déplacée, qui a une possibilité de déplacement transversal par rapport à l'axe longitudinal (6) et est située, dans une première position terminale, dans la saillie latérale de la partie de boîtier (4) et, dans une deuxième position terminale, sur ou au-dessus de l'ouverture (8).

3. Cloche de blindage selon la revendication 2, caractérisée en ce que le couvercle (20) est suspendu à articulation en son milieu à une plaque de support (24) qui peut se déplacer au moyen d'une commande de levage le long de guides verticaux et en ce que les guides et la commande de levage sont assemblés à un support (27) pouvant se déplacer le long de rails horizontaux (41).

4. Cloche de blindage selon la revendication 3, caractérisée en ce que le support mobile (27) est assemblé par un bloc (35) avec un trou fileté a une broche filetée (36) montée à pivot, dont une extrémité fait saillie de la partie de boîtier (4) et qui est assemblée à un moteur d'entraînement (38) fixé extérieurement a la partie de boîtier.

5. Cloche de blindage selon la revendication 3, caractérisée en ce que la plaque de support (24) est assemblée aux extrémités des broches filetées (28) à deux endroits diamétralement opposés l'un à l'autre par rapport à la suspension du couvercle (20), ces broches étant insérées dans les douilles filetées du support (27) qui sont montées à pivot sur le support (27) et qui sont assemblées par des arbres (30) à un moteur (31) fixé au support (27) qui présente des extrémités d'arbre (32) faisant saillie de part et d'autre de son boîtier, l'une de ces extrémités venant affleurer un passage (33) dans la paroi de la cloche de blindage (1) dans la deuxième position terminale latérale du couvercle (20) et en ce que le passage (33) peut être fermé par un bouchon.

6. Cloche de blindage selon une ou plusieurs des revendications précédentes 2 - 5, caractérisée en ce que la cuve de collecte de liquide (44) est pourvue sur ses côtés de roues (45) qui peuvent rouler sur des rails (46) et en ce que, sur un côté de la cuve de collecte de liquide (44), est fixé un bloc d'entraînement (47) avec un trou fileté, dans lequel est placée une broche filetée (48) dont une extrémité fait saillie de la partie de boîtier (4) et est assemblée à un moteur d'entraînement (50) fixé à l'extérieur de la partie de boîtier (4).

7. Cloche de blindage selon une ou plusieurs des revendications précédentes 2 - 6, caractérisée en ce que la cuve de collecte de liquide (44) est connectée à une conduite d'évacuation d'eau.

8. Cloche de blindage selon une ou plusieurs des revendications précédentes 2 - 7, caractérisée en ce qu'il est prévu un raccordement pour conduite d'évacuation d'air (51), près de l'extrémité supérieure de la cloche de blindage (1).

9. Cloche de blindage selon une ou plusieurs des revendications précédentes 2 - 8, caractérisée en ce qu'un bouchon de décontamination est prévu pour le raccordement d'une lance à haute pression dans une paroi.

10. Cloche de blindage selon une ou plusieurs des revendications précédentes 2 - 9, caractérisée en ce qu'au moins la position terminale supérieure du grappin (13), les première et deuxième positions terminales du couvercle (20) et les positions terminales supérieure et inférieure du couvercle (20) peuvent être détectées au moyen de capteurs dont les indications peuvent être affichées dans un dispositif de commande relié par un câble à la cloche de blindage (1).

11. Cloche de blindage selon une ou plusieurs des revendications précédentes 2 - 10, caractérisée en ce que la cloche de blindage est revêtue intérieurement d'acier inoxydable.

12. Cloche de blindage selon une ou plusieurs des revendications précédentes 2 - 11, caractérisée en ce que des points de butée (52, 53) pour une suspension à deux pattes sont prévus près de l'extrémité supérieure.

13. Cloche de blindage selon une ou plusieurs des revendications précédentes 2 - 12, caractérisée en ce qu'au moins les broches filetées (28, 36, 48), les barres de guidage (39, 49) pour le support (27) et la cuve de collecte de liquide (44) et les roues (40, 45) du support et de la cuve de collecte de liquide (44) sont réalisées en acier inoxydable.

14. Cloche de blindage selon une ou plusieurs des revendications précédentes 2 - 13, caractérisée en ce que les pièces non constituées d'acier inoxydable et situées à l'intérieur de la cloche de blindage (1) sont revêtues d'un revêtement à plusieurs couches en matériau résistant à la corrosion, facile à décontaminer et résistant à l'eau sous haute pression.

15. Cloche de blindage selon au moins la revendication 2, caractérisée en ce qu'une commandé à câble (18) actionnant un câble de traction est fixée avec encapsulation à l'extérieur sur la cloche de blindage (1) et en ce que le câble de traction passe à travers une fente (16) dans la cloche de blindage (1).

16. Cloche de blindage selon au moins la revendication 2, caractérisée en ce que l'ouverture de la cloche de blindage (8) peut être adaptée à des couvercles de récipient présentant des dimensions différentes.

17. Cloche de blindage selon la revendication 16, caractérisée en ce que l'adaptation est réalisée au moyen de bagues d'adaptation.

18. Cloche de blindage selon au moins la revendication 2, caractérisée en ce que le dispositif de levage (14) pour le récipient (19) pour les matériaux radioactifs est connecté à un dispositif de pesage.
